# EUROPEAN PATENT APPLICATION

(11) **EP 0 629 422 A2**
(43) Date of publication of application: **21.12.1994**
(21) Application number: 94109305.6
(22) Date of filing: 16.06.1994
(51) Int. Cl.: B01D 17/04, B01D 17/022, B01D 45/14

(54) **Method and apparatus for separating aqueous phase from fluid medium**

(30) Priority: 18.06.1993 US 80644
(71) Applicant: HYCO SYSTEMS INC., Calgary, Alberta T2H 0G4 (CA)
(72) Inventor: Hitman, Robert, Red Deer, Alberta T4N 3K8 (CA)
(74) Representative: Wagner, Karl H., Dipl.-Ing.

(57) **Abstract**

Method and apparatus for the dehydration of liquid and gaseous media include the use of at least one coalescing bed filled with beads preferably graded in size. The beads have a smooth, non-absorbent, non-conductive and hydrophobic surface. The use of beads of this type substantially prevents irreversible contamination and clogging of the coalescing bed and significantly reduces channeling, especially when spherical beads are used. Dehydration of a gaseous medium can be achieved without using a counter current of a hydrophillic liquid.

## Description

### FIELD OF THE INVENTION

The invention relates to method and apparatus for the removal of water from a fluid medium containing suspended droplets of water by passing the fluid medium through a coalescing medium whereby the droplets are coalesced into a water phase which can be easily removed. More particularly, the invention is concerned with the breaking of "tight" oil-and-water emulsions and the separation of water entrained in a flow of natural gas.

### BACKGROUND OF THE INVENTION

In oil fields, water is usually produced with crude oil or natural gas. Both must be free of water before they can be sold or shipped. Where the mixture has only "free" water, the water will readily separate under the influence of gravity. However, the water may be dispersed in very fine particles of less than 25 microns as in the case of a water-in-oil emulsion which is very difficult to separate. Emulsions can be broken either physically or chemically. Chemical separation is disadvantageous, since the separated water is contaminated with emulsifiers and, thus, cannot be readily disposed. During physical separation, those water particles which are too small to readily separate must be coalesced into larger droplets before they can be separated by the effect of gravity. Coalescing media used in traditional physical treatments include water saturated wood excelsior or hay, sand, diatomatious earth, fibrous webs formed of glass fibers, synthetic polymeric fibers or naturally occurring fibers, open pore foams or ground walnut shells. Common deficiencies of these treatments include a tendency to channel, failure to coalesce very small droplets, and especially a tendency toward fouling of the coalescing material by clogging with impurities, since, generally, most coalescers follow a filter approach.

Conventional apparatus and coalescing media as described are disclosed in the following patents:

| | |
|---|---|
| U.S. 3,491,882 (Elam) | CA 826,478 (Bruinzeel et al.) |
| U.S. 3,992,291 (Hirs) | CA 871,265 (O'Neill) |
| U.S. 4,129,499 (Cairns et al.) | U.S. 4,592,849 (McMillen) |
| CA 1,007,538 (Murkes) | U.S. 4,804,471 (Velisavljevic) |
| CA 1,072,017 (Chambers) | NL 6,510,271 (Shell) |
| JP 56 15,807 (Showa Denko) | |

Elam (U.S. 3,491,882) teaches the use of a non-fibrous graded gravel bed as first filter medium and several further filter layers made of plastic fibers and wire wool. However, no solution to the problem of clogging especially by absorption of contaminants to the filter material is provided.

To overcome the problem of clogging, Murkes (CA 1,007,538) and Showa Denko (JP 56 15,807) disclose the use of a bed of a granular filtering and coalescing medium which is fluidized by the flow of liquid to be treated. However, this process requires sophisticated and expensive control equipment and the problem of absorption of contaminants by the coalescing medium is not addressed.

Finally, Cairns et al (U.S. 4,129,499) and Showa Denko (JP 56 15,807) both teach the use of glass beads for coalescing oils instead of water.

The conventional method for separating water from natural gas is glycol treatment. In that method, the natural gas is passed through a tower in counter current to a stream of glycol. The object is to cause the glycol to take up the water. In order to increase the contact area between the glycol and the water, the tower is generally filled with a series of trays with bubble caps or with shaped bodies generally made of steel (conically shaped Pahal Rings*) or ceramic material (horseshoe shaped Rashic Rings*). However, both tower constructions suffer from the disadvantage that the trays or shaped bodies may be ineradicably contaminated if the natural gas stream includes contaminants such as ashphaltenes and bitumens, requiring costly shut-down and cleaning of the apparatus.
* Trade Mark

### SUMMARY OF THE INVENTION

The disadvantages of the above methods and apparatus are now addressed by the method and apparatus in accordance with the invention wherein the coalescing bed is made of a plurality of ball-shaped, stacked beads or marbles having a smooth, non-absorbent, non-conductive and hydrophobic surface. With beads of this surface structure the most difficult and common maintenance problems presented by conventional separation systems are overcome. In particular, clogging and fouling of the coalescing bed by entrapment, absorption or adsorption of contaminants from the fluid medium to be dewatered is substantially prevented. Furthermore, the coalescing bed of the present invention can be used for the separation of water from both liquid and gaseous media.

Accordingly, the present invention in one aspect provides a method for the separation of an aqueous phase from a fluid, which includes the steps of providing a coalescing bed including a plurality of stacked beads having a smooth, non-conductive, non-absorbent and hydrophobic surface, passing a stream of untreated fluid having the aqueous phase entrained therein through the coalescing bed for coalescing the aqueous phase, and removing dewatered fluid exiting the coalescing bed.

Where the fluid is a liquid, the above basic method preferably includes the further steps of heating the stream of untreated fluid prior to entry into the coalescing bed and collecting separated water exiting the coalescing bed.

For the drying of gaseous media, the basic method preferably includes the further steps of passing a stream of a hydrophillic liquid through the coalescing bed in counter current to the stream of the fluid to cause the hydrophillic liquid to entrain water coalesced on the beads and removing the hydrophillic liquid and water mixture exiting the coalescing bed from the vessel. The hydrophillic liquid is preferably selected from the group of ethylene glycol, diethylene glycol and triethylene glycol.

In another aspect, the present invention provides an apparatus for the separation of an aqueous phase from a fluid, which apparatus includes a vessel, a coalescing bed positioned in the vessel for separating the aqueous phase from the untreated fluid, input means for feeding untreated fluid having the aqueous phase entrapped therein into the vessel, and output means for removing dewatered fluid from the vessel. The coalescing bed includes a plurality of stacked beads having a smooth, non-conductive, non-absorbent and hydrophobic surface, and is positioned in the vessel so that all untreated fluid fed into the vessel by the input means passes through the coalescing bed before removal from the vessel by the output means.

When the fluid is a liquid, the above basic apparatus preferably further includes means for heating the untreated fluid prior to entry into the coalescing bed and drainage means for removing from the vessel water separated by the coalescing bed. On the other hand, where the medium to be dewatered is a gas, the basic apparatus preferably further includes liquid spreading means for passing an even stream of a water-free hydrophillic liquid through the coalescing bed in counter current to the fluid to take up water separated by the coalescing bed. The hydrophillic liquid is preferably one of ethylene glycol, diethylene glycol and triethylene glycol.

The coalescing bed used in the method and apparatus of the present invention is preferably graded whereby the size of the beads increases in flow direction of the fluid and the amount of beads of relatively smaller size is selected to prevent the coalescing bed packing too tightly for efficient coalescing action. The beads are preferably made of glass with an average diameter in the range of 1/4 inch to 2 inches.

With the use of coalescing beds in accordance with the present invention, several problems of prior methods and apparatus are overcome. The smooth surface structure of the beads substantially reduces channeling and foaming, since flow past smooth beads is substantially turbulence free. The required smoothness or maximum roughness of the surface of the beads depends on whether the beads are used for the dewatering of a liquid or gaseous medium. The dewatering of liquid media usually requires beads having a lower surface roughness than those usable in the dewatering of liquids. Beads having the smallest surface roughness obtainable are most preferred. However, depending on the contaminants included in the fluid to be dewatered, beads having a higher surface roughness may still be effective as coalescing bodies, especially in the dewatering of gases. Generally, the surface of the beads must be sufficiently smooth to substantially prevent contamination and/or a filtering action of the coalescing bed, for example by entrapment of contaminants in depressions of the beads' surface. The preferred beads for use in the method and apparatus of the invention have a surface roughness in the range of below 0.1 µm Ra to 1.6 µm Ra, but beads having a higher surface roughness may be used in some applications. Principally, the surface of the beads should be smooth to the touch.

The non-absorbent and non-conductive properties of the beads also substantially prevent contamination of the coalescing bed. Furthermore, the use of bead or ball-shaped coalescing bodies provides for a small contact area between adjacent bodies leaving a major portion of each body's surface for the coalescing action. At the same time, sufficient spacing between the coalescing bodies is achieved to substantially prevent clogging of the coalescing bed by fine particulates. The coalescing bed does not function as a filter. Finally, the hydrophobic property of the surface of the beads assures that the whole free surface area of the beads is used for the coalescing function.

### BRIEF DESCRIPTION OF THE DRAWINGS

Preferred embodiments of the invention will be further described in the following by way of example only and with reference to the accompanying drawings, wherein:
Figure 1 is a schematic cross section through a first preferred embodiment of an apparatus in accordance with the invention for the separation of water-in-oil emulsions;
Figure 2 illustrates a variation of the apparatus shown in Figure 1 which includes a plurality of coalescing beds; and
Figure 3 is a schematic cross section through a second preferred embodiment of an apparatus in accordance with the invention for the removal of water from gaseous media.

### DETAILED DESCRIPTION OF THE PREFERRED EMBODIMENTS

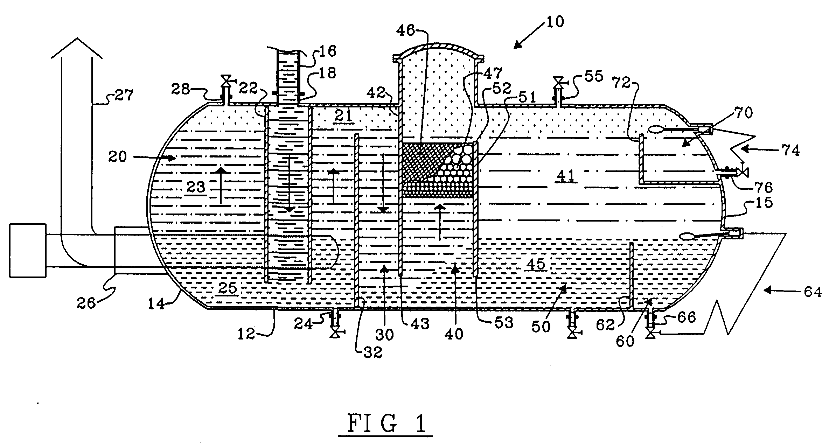

A preferred apparatus 10 for the breaking of water-in-oil emulsions is shown in Figure 1. The apparatus 10 includes a horizontally positioned cylindrical vessel 12 which has domed closed ends 14, 15 and includes a heating chamber 20, a transfer chamber 30, a coalescing section 40, a settling chamber 50 and water and oil collecting chambers 60 and 70.

An emulsion feed line 16 is connected to an inlet port 18 which opens into an emulsion distributor conduit 22 that extends vertically downwardly into heating chamber 20. The heating chamber 20 has a sufficiently large capacity so that emulsion delivered thereinto will have sufficient residence time to permit stratification of the oil and emulsion into an upper layer 23 and free water into a lower layer 25. The distributor conduit 22 has a large cross-section to prevent turbulent flow in the heating chamber 20 and the resulting mixing of the upper and lower layers 23 and 25. A valve controlled water draw-off 24 is provided for the draining of the free-water accumulated at the bottom of the heating chamber 20. A standard fire tube 26 used in conventional emulsion heater treater applications extends horizontally into the heating chamber 20 from domed end 14 and is positioned higher than the lower end 29 of the distributor conduit 22 so that emulsion fed into the heating chamber 20 rises by the fire tube 26 for maximum utilization of the heat therefrom. The fire tube 26 is made of a return bend pipe of large capacity for sufficient heating of the large body of fluids passing upwardly through the heating chamber 20. The fire tube 26 is fired with gas or oil and is controlled by a standard liquid temperature control system known in the art (not shown). Flue gas is exhausted from the fire tube 26 through a flare stack 27. Gas which separates from the emulsion upon heating accumulates above the layer of oil and emulsion 23 and is vented through a closable gas discharge pipe 28. A first vertical baffle 32 separates the heating chamber 20 from the transfer chamber 30. A horizontal top edge 34 of baffle 32 is spaced from the top of vessel 12 to leave an aperture which provides for a flow of emulsion and oil from the upper layer 23 into the transfer chamber 30. The top edge 34 of baffle 32 is positioned sufficiently high so that a transport of accumulated free water from the lower layer 25 into the transfer chamber 30 is prevented at all operating conditions of the apparatus. A second vertical baffle 42 separates the transfer chamber 30 from the coalescing section 40 and is spaced from the bottom of the vessel 12 to leave an opening which at all operating conditions is positioned in a layer of separated water 45 that accumulates at the bottom of the coalescing section 40 as will be described further below. A transverse vessel dividing wall 51 which has horizontal top and bottom edges 52, 53 defines the coalescing section 40 towards the settling chamber 50. The top and bottom edges 52, 53 are always located in the layer of dewatered oil 41 and the layer of separated water 45 respectively, which layers are present in the coalescing section 40 and the settling chamber 50 during operation of the apparatus. A wire mesh cage 46 (partially cut away in Fig. 1) which supports a graded glass bead coalescing bed 47 is mounted in the coalescing section 40 to completely fill the coalescing section in horizontal direction so that all the emulsion pumped through the section must flow through the coalescing bed 47. The cage 46 is mounted sufficiently high above the layer of separated water 45 so that only emulsion and no already separated water will be forced therethrough during operation. The coalescing bed 47 in this embodiment includes 8 horizontal layers of glass beads of graded size (commercially available from Fiberglass Canada/Owens-Corning fiberglass; Schuller International/Manville; Vacor (Mexico) and Chin Yao (Taiwan)). The diameters of the glass beads in the respective layers are, from the bottom up, 1/4, 3/8, 1/2, 1, 1 1/4, 1 1/2, 1 3/4 and 2 inch. The total volume of the beads in the respective layers is preferably lower for the beads of 1/4, 3/8 and 1/2 inch diameter than for the beads of larger size so that a sufficiently large flow through of liquid to be dewatered can be maintained and excessively tight packing of the coalescing bed prevented. For applications with very large flow through ratios and/or for the separation of emulsions with a relatively high particulates content, the minimum bead size is preferably 1/2 inch. The beads are spherical and have a smooth, non-conductive, non-absorbent and hydrophobic surface which prevents turbulent flow and, thus, channeling, and also substantially eliminates the problem of fouling of the coalescing bed 47 caused by contaminants adhered to or absorbed by the beads. The spherical shape of the beads also reduces the risk of clogging of the coalescing bed, since sufficient free space is available between the beads for the passage of fine particulates. Thus, the coalescing bed 47 does not function as a filter. The surface roughness of the beads or marbles used in this preferred embodiment was determined as per the surface roughness standards of the six most important machining methods in the prevalent Ra (CLA) values as standardized in British Standard 1134/1972. The surface roughness was rated by a finger nail comparison to a set of standardized samples.

**TABLE 1**

| SURFACE ROUGHNESS TEST RESULTS | | | | |
|---|---|---|---|---|
| Marble | Manufacturer | µm Ra | µin. Ra | used in the dewatering of |
| Large E-glass | Corning/Manville | 1.6 | 63 | gas |
| Large E-glass | Corning/Manville | 1.6 | 63 | gas |
| Small E-glass | Corning/Manville | <0.1 | <4 | gas |
| Small E-glass | Corning/Manville | <0.1 | <4 | gas |
| Large White | Vacor | 0.4 | 16 | liquid |
| Large White | Vacor | 1.6 | 63 | liquid |

The term Ra is the surface roughness average of the arithmetic average of the absolute values of the profile height deviations measured from the roughness centreline. As this was a comparative test, the values in Table 1 are approximations.

The surface of the large E-glass and large while marbles was further analyzed by viewing under the scanning electron microscope. The samples were prepared by thoroughly cleaning and sputter coating with gold. The size of the surface depressions on the large E-glass marble was 69.8 µm by 410 µm. The surface of the large white marble (1.6 µm Ra) exhibited indentation measurements of 225 µm by 952 µm. The dimensions of the depressions were determined at regions of the marble surfaces which exhibited the greatest roughness. The dimensions are approximate and should, therefore, not be taken as absolute. The surface roughness of the beads or marbles was caused only by indentation of the bead surface.

Water and oil collecting chambers 60 and 70 are positioned at the downstream end of the settling chamber 50 and in the respective layers of accumulated separated water 45 and dewatered oil 41. The lowest level of the water and oil layers 45 and 41 during operation is dependent on the height of the water and oil chamber separating walls 62 and 72. The height of these walls is selected so that the minimum level of the dewatered oil layer 41 is always slightly above the coalescing bed 47 and the minimum level of the separated water layer 45 is always above the bottom edge 53 of the vessel dividing wall 51. On the other hand, the maximum level of the separated water and dewatered oil layers 41 and 45 in the coalescing section 40, the settling chamber 50 and water and oil collecting chambers 60 and 70 is respectively controlled through standard valve and float arrangements 64 and 74 (Kimray or Fischer) known in the art of emulsion heater treaters. The dewatered oil is transported to a pipeline or filling station (not shown) through an oil drainage line 76 and the separated water is drawn off through a drain pipe 66 and discarded or pumped, if required, to a further processing station (not illustrated) prior to disposal for the removal of contaminants potentially harmful to the environment. Any gas which separates from the emulsion during and after passage through the coalescing bed 47 accumulates above the dewatered oil layer 41 and excess gas is removed through a valve controlled vent 55.

The vessel 12 is provided with an access opening 80 which is normally sealed by a domed cover 82 for easy cleaning and maintenance of the vessel interior and the structures therein. Furthermore, a normally closed maintenance drain 84 is provided for the complete draining of the transfer chamber 30, the coalescing section 40 and the settling chamber 50.

During operation, water in oil emulsion usually containing free-water is pumped through emulsion feed line 16, inlet port 18 and distributor conduit 22 and exits at the bottom end of the distributor conduit into chamber 20. Free-water and gas entrained in the emulsion separate from the emulsion under the influence of gravity into the lower free-water layer 25 and a gas layer 21. Remaining emulsion and oil accumulate into the emulsion and oil layer 23. As the material fed into the vessel 12 exits the distributor conduit 22 into the heating chamber 20, it passes by the heater tube 26 and is heated to a temperature of 120 to 200°F. This accelerates the breaking of the emulsion into oil and water in the coalescing bed 47. New untreated emulsion is continuously fed into the heating chamber 20 so that the emulsion and oil mixture in layer 23 overflows around first baffle 31 into the transfer chamber 30 wherein it is pushed downward until it flows around the bottom end 43 of second baffle 42 into the coalescing section 40. Excess gas and free-water is removed from layers 21 and 25 in the heating chamber 20 through gas discharge pipe 28 and water draw-off 24 respectively so that a continuous flow of emulsion into the transfer chamber 30 is ensured. As the emulsion and oil mixture is pushed upwards through the coalescing bed 47, small water droplets in the emulsion coalesce on the glass beads of the bed into larger water droplets that either sink towards the bottom of the coalescing section 40 or are carried over the vessel separating wall 52 into the settling chamber 20 as part of the broken emulsion which exits the coalescing bed 47. In either case, these large droplets sink and accumulate at the bottom of the coalescing section 40 and the settling chamber 50 in form of the layer of separated water 45. Since the water in layer 45 has a higher specific weight than the oil and emulsion mixture pushed downwards through the transfer chamber 30 and the level of the separated water layer 45 is always higher than the bottom edge 53 of the vessel dividing wall 51, the oil and emulsion mixture floats on the water layer 45 and is pushed upwards into the coalescing bed 47 instead of moving around the bottom end 53 of the dividing wall. The maximum level of the separated water layer 45 is controlled by the water float and valve arrangement 64 and kept sufficiently low so that no water will be pushed up into the coalescing bed 47 from the separated water layer 45. Separated water and dewatered oil is removed from the water and oil collecting chambers 60 and 70 respectively either continuously or intermittently through the drain pipe 66 and the oil drainage line 76 respectively. Removal is controlled by float and valve arrangements 64 and 74. The drained dewatered oil is either stored in a holding tank (not shown) prior to shipping or fed directly into a pipeline (also not shown). The water content in the dewatered oil is sufficiently low for sale of the oil without further water removing treatment. Water contents in the dewatered oil as low as 0.1% can be achieved with an apparatus in accordance with the invention. The drained separated water is either discarded or further processed to remove potentially hazardous contaminants before disposal.

A conventional solids filter may be used for the removal of solid impurities such as sand, clay, shale or salt from the emulsion prior to feeding it into the vessel 12 in order to prevent the particulate matter accumulating therein.

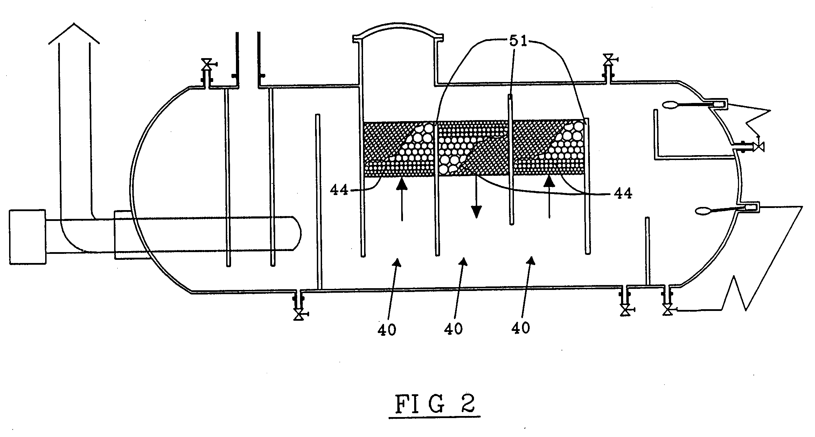

Figure 2 shows another preferred embodiment of an apparatus for the separating of an aqueous phase from a liquid imisible with water. This embodiment is preferred for the treatment of water and oil emulsions of a high water content of up to 90%. As will become apparent from the drawing, at least two coalescing sections 40 are in this embodiment positioned in series in the vessel 12 for the successive separation of water and for a more complete dewatering of the oil. The respective intermediate transverse vessel dividing walls 51 are staggered in vertical direction so that the liquid to be treated will flow alternately upward and downward through adjacent coalescing beds 47 as indicated by the arrows in the drawing. Accordingly, the beads in the coalescing beds are always graded in direction of the fluid flow, i.e. the bead size increases with the fluid flow. The remainder of the construction of this embodiment is identical to the one described above with reference to Figure 1.

Although the coalescing beds in these preferred embodiments are graded glass bead coalescing beds, other coalescing bed fillings of glass beads of even size, for example 1/2 inch, can be used. Furthermore, beads of other materials which have a sufficiently smooth and non-absorbent, non-conductive and hydrophobic surface can be used in apparatus and methods in accordance with the invention. Finally, the glass beads need not be of exactly spherical shape, although best results are obtained with spherical beads.

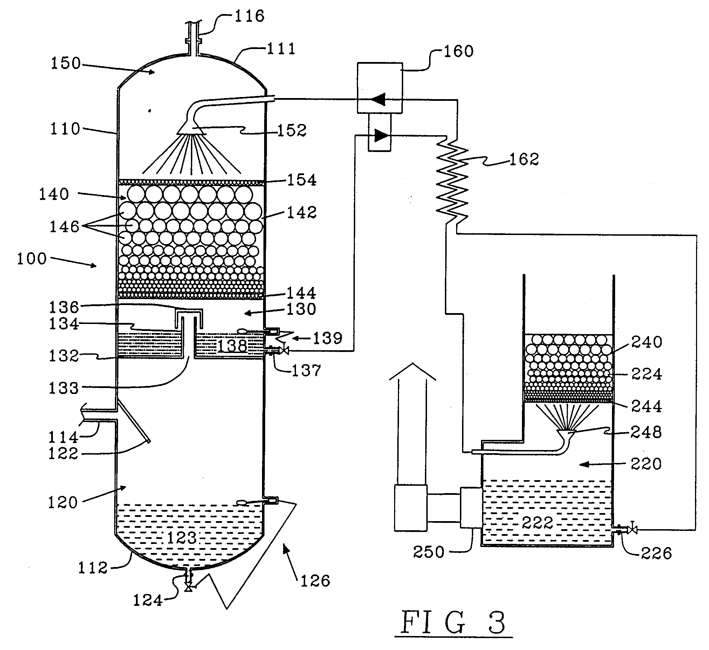

Turning now to Figure 3, a preferred embodiment of a gas dehydrator apparatus 100 in accordance with the invention for the separation of an aqueous phase from a gas includes a cylindrical tower 110 having domed top and bottom ends 111, 112. The tower 110 encloses a settling chamber 120, a glycol collecting chamber 130, a coalescing section 140 and a glycol spreading section 150.

A gas inlet port 114 is provided for the introduction into the settling chamber 120 of gas having water entrained therein. A gas diverter plate 122 is positioned in the settling chamber 120 and over the inlet port 114 to increase the residence time of the gas in the settling chamber. The tower 110 includes a valve controlled water drain 124 which is positioned at the lowest point of the separating chamber 120 for the removal of accumulated free-water separated from the gas flow in this chamber. The settling chamber 120 is separated from the glycol collecting chamber 130 by a gas baffle 132 which is provided with a central opening 133. A vertical gas flow pipe 134 is welded with its lower end to the gas baffle 132 around the opening 133. A gas diverter cap 136 is positioned over the top end of the gas flow pipe 134 for the achievement of an even distribution of the gas flow in the glycol collecting chamber 130. The coalescing section 140 is charged with a graded coalescing bed 142 of glass beads 146 which range is size from 1/4 inch to 2 inches in diameter. The same glass beads as in the embodiments of Figures 1 and 2 are used. This means that the beads have a smooth, non-absorbent, non-conductive and hydrophobic surface and that their size increases in flow direction of the gas, i.e. vertically upwardly. The coalescing bed 142 is supported on a perforated gas spreader plate 144 which is horizontally mounted in the tower 110. The coalescing bed 142 over its whole vertical extent completely fills the tower in radial direction so that all gas introduced into the glycol collecting chamber 130 must flow through the coalescing bed. A conical glycol spreader head 152 is positioned in the glycol spreading section 150 and radially centered in the tower 110 above the coalescing bed 142. For a more even distribution of the glycol over the coalescing bed, a perforated glycol spreader plate 154 is horizontally positioned between the spreader head 152 and the coalescing bed. The domed top 111 of the tower 110 includes a dewatered gas outlet port 116 for the removal of saleable dewatered gas from the dehydrator 100 for sale or shipping. The dewatered gas may be directly fed into a pipeline (not shown) from the outlet port 116 or into stationary or portable holding tanks (also not illustrated).

The dehydrator apparatus 100 of this embodiment is preferably used in combination with a glycol reconditioning unit 200 which includes a boiler chamber 220 and a still column 240. A coalescing bed 140 which corresponds in construction to the one used in the dehydrator apparatus 100 is provided in the still column and supported on a horizontal gas spreader plate 244. The coalescing bed 140 is graded so that the bead size increases vertically upward. A heated glycol and water mixture spreader head 244 is positioned below the distribution plate 246 and is centered in the still column 240. Dewatered glycol 222 which accumulates in the boiler chamber 220 is drained through a valve controlled drain port 226. A two circuit liquid pump known to persons skilled in the art of gas dehydrators is positioned between the dehydrator apparatus 100 and the reconditioning unit 200 for the cycling of glycol and entrained water from the dehydrator apparatus to the reconditioning unit and dewatered glycol from the reconditioning unit back to the dehydrator. The dewatered glycol 222 accumulated in the boiler chamber is heated by a conventional furnace 250 (Eclipse burner) generally used in gas dehydrator installations to a minimum of 200°F. A heat exchanger 162 is provided for the transfer of heat from the dewatered glycol 222 to the glycol and water mixture 138 coming from the dehydrator apparatus 100.

During operation, gas having water entrained therein is continuously fed through gas inlet port 114 into the settling chamber of dehydrator 100. The gas flow is directed along the wall of the cylindrical settling chamber 120 by the gas diverter plate 122 which causes free water entrained in the gas to separate and accumulate in form of a separated water layer 123 at the bottom of the chamber. If the shape and position of the gas diverter plate 122 is selected appropriately, a cyclone effect can be achieved as will be readily appreciated by persons skilled in the art. Excess water is removed through the drain 124. The level of layer 123 is controlled by way of a conventional float and valve arrangement 126 (Kimray or Fischer). From the settling chamber 120, the gas is pushed upward through the gas flow pipe 134 into glycol collecting chamber 130 and through the gas spreader plate 144 into the coalescing bed 142. Substantially water free ethylene glycol, diethylene glycol or triethylene glycol is fed through the glycol spreader head 152 into the glycol spreading chamber 150. The glycol stream is evenly distributed over the coalescing bed 142 by the glycol spreader plate 154. Small water droplets entrained in the gas stream flowing through the coalescing bed 142 are coalesced on the glass beads 146 and then taken up by the stream of glycol flowing through the coalescing bed in counter current to the gas. Saleable dewatered gas exits the coalescing bed into the glycol spreading chamber 150 and is removed from the apparatus 100 through the gas outlet port 116. The glycol and water mixture exiting the coalescing bed accumulates in a "wet glycol" layer 138 of glycol and entrained water at the bottom of the glycol collecting chamber 130. Wet glycol 138 is continuously removed through a glycol drain port 137. A conventional float and valve arrangement 139 (Kimray or Fischer) is used to control the level of the wet glycol 138 in such a way that the flow of gas through the gas flow pipe 134 is not hindered. The wet glycol 138 is pumped by way of the liquid pump 160 through one side of the heat exchanger 162 to the glycol spreader head 244 of the glycol reconditioning unit 200. At the same time, dewatered glycol heated to at least 200°F is pushed by pump 160 through the other side of the heat exchanger 162 and in counter current to the wet glycol. Heat exchanger 162 is of sufficiently large capacity so that the wet glycol is heated to at least 200°F. This results in the wet glycol exiting the glycol spreader head 244 as steam and hot wet glycol. The stream of steam and hot wet glycol is directed upward through the coalescing bed 240 and evenly distributed over the coalescing bed by the spreader plate 246. The water entrained in the hot glycol coalesces on the beads 242 of the coalescing bed 240 and is carried away by the steam rising through the bed. Dewatered glycol drips from the coalescing bed 240 into the boiler chamber 220 wherein it is heated to a minimum of 200°F by the furnace 250 so that any water still entrained therein will be driven out as steam. The glycol stream is divided by the spreader head 244 and evenly distributed over the coalescing bed 242 by the glycol spreader plate 246. The glass bead packing in the still column 240 forces the wet glycol around a very large contact area which corresponds to about 18,000 square inches in an 8" by 5' column. This ensures that the wet glycol is forced into a fine film on the glass beads of the coalescing bed 242 allowing any free water to coalesce on the beads and any or all entrained water to be stripped from the glycol by the counter flowing stream of steam. Dewatered or "dry" glycol is removed from the boiler chamber 220 through drain 226 and pumped back to the spreader head 152 of the dehydrator 100 and through heat exchanger 162 by pump 160 as described above.

As in the aforementioned emulsion separating apparatus 10, the coalescing beds 140, 240 of the dehydrator apparatus 100 and the reconditioning unit 200 need not be graded, although graded beds are preferred. Coalescing beds 140, 240 can be filled with beads of equal size, preferably 1/2 inch in diameter. Non-spherical beads can be used. Hydrophillic liquids other than glycol can be used in the gas dehydration aspect of the invention, although glycol has been widely used and is the hydrophillic liquid of choice in conventional gas dehydrator arrangements. Furthermore, the gas dehydration apparatus and method in accordance with the invention can be operated successfully without using any hydrophobic liquid at all. In fact, the same degree of dehydration as if a hydrophillic liquid were used can be achieved with an appropriately high coalescing bed.

This, however, means that a method and apparatus in accordance with the invention can be used for the dehydration of amine gas by directing a stream of cold amine gas and entrained water over a coalescing bed in accordance with the invention in counter current to a stream of hot amine gas and steam. Thus, it becomes apparent from the above discussion of the liquid and gas dehydration aspects of the invention, that the apparatus and methods of the invention can be used for the dewatering of liquids as well as gases.

Changes and modifications in the specifically described embodiments can be carried out without departing from the scope of the invention which is intended to be limited only by the scope of the appended claims.

It should be noted that the objects and advantages of the invention may be attained by means of any compatible combination(s) particularly pointed out in the items of the following summary of the invention and the appended claims.

### The Invention may be summarized as follows:

1. A method for separating an aqueous phase from a fluid, comprising the steps of:
   providing a coalescing bed including a plurality of stacked beads having a non-conductive, non-absorbent and hydrophobic surface with a maximum surface roughness of about 1.6 µm Ra;
   passing through the coalescing bed a stream of untreated fluid having the aqueous phase entrained therein for coalescing the aqueous phase; and
   removing dewatered fluid exiting from the coalescing bed.
2. A method as defined in 1, wherein at least two coalescing beds are provided which are positioned in series in direction of flow of the fluid for successive separation of the aqueous phase from the fluid, the dewatered fluid being removed only after having passed through all coalescing beds.
3. A method as defined in 1, wherein the fluid is a liquid immiscible with water, further comprising the step of heating the stream of untreated fluid prior to entry into the coalescing bed.
4. A method as defined in 3, further comprising the steps of collecting and removing water separated from the fluid.
5. A method as defined in 1, wherein the fluid is a gas, further comprising the steps of:
   passing a stream of a hydrophillic liquid through the coalescing bed in counter current to the stream of untreated fluid to cause the hydrophillic liquid to entrain water coalesced on the beads of the coalescing medium, and removing a mixture of hydrophillic liquid and water exiting the coalescing bed.
6. A method as defined in 5, wherein the hydrophillic liquid is selected from the group of ethylene glycol, diethylene glycol and triethylene glycol.
7. A method as defined in 4, wherein the coalescing bed is graded, the size of the beads increasing in the flow direction of the fluid and the amount to beads of relatively smaller size being lower than the amount of beads of relatively larger size to prevent the coalescing bed packing too tightly for efficient coalescing action.
8. A method as defined in 7, wherein the beads are spherical.
9. A method as defined in 8, wherein the beads have an average diameter in the range of 1/4 inch to 2 inches.
10. A method as defined in 9, wherein the beads are made of glass.
11. An apparatus for the separation of an aqueous phase from a fluid, comprising:
   a vessel;
   a coalescing bed positioned in the vessel for separating the aqueous phase from untreated fluid having the aqueous phase entrained therein;
   input means for feeding the untreated fluid into the vessel;
   the coalescing bed including a plurality of stacked beads having a non-conductive, non-absorbent and hydrophobic surface with a maximum surface roughness of about 1.6 µm Ra, and the coalescing bed being positioned in the vessel so that all untreated fluid fed into the vessel by the input means passes through the coalescing bed.
12. An apparatus as defined in 11, wherein the fluid is a liquid immiscible with water, the apparatus further comprising means for heating the untreated fluid prior to entry into the coalescing bed.
14. An apparatus as defined in 13, further comprising drainage means for removing from the vessel water separated in the coalescing bed.
15. An apparatus as defined in 11, wherein the fluid is a gas, the apparatus further comprising liquid spreading means for passing a stream of a hydrophillic liquid through the coalescing bed in counter current to the fluid to take up water separated by the coalescing bed, and collecting means for removing from the vessel a mixture of hydrophillic liquid and water.
16. An apparatus as defined in 5, wherein the hydrophillic liquid is selected from the group of ethylene glycol, diethylene glycol and triethylene glycol.
17. An apparatus as defined in claim 14, wherein the coalescing bed is a graded bed of beads, the size of the beads increasing in flow direction of the fluid and the amount of beads of relatively smaller size being lower than the amount of beads of relatively larger size to prevent the coalescing bed packing too tightly for efficient coalescing action.
18. An apparatus as defined in 15, further comprising processing means for regenerating the hydrophillic liquid from the mixture of hydrophillic liquid and water removed from the vessel and transporting means for recirculating regenerated hydrophillic liquid to the spreading means.
19. An apparatus as defined in 17, wherein the beads are of spherical shape, made of a hydrophillic material and have an average diameter in the range of 1/4 inch to 2 inches.
20. An apparatus as defined in 19, wherein the beads are made of glass.

## Claims

1. A method for separating an aqueous phase from a fluid, comprising the steps of:
providing a coalescing bed including a plurality of stacked beads having a non-conductive, non-absorbent and hydrophobic surface with a maximum surface roughness of about 1.6 µm Ra;
passing through the coalescing bed a stream of untreated fluid having the aqueous phase entrained therein for coalescing the aqueous phase; and
removing dewatered fluid exiting from the coalescing bed.

2. A method as defined in claim 1, wherein at least two coalescing beds are provided which are positioned in series in direction of flow of the fluid for successive separation of the aqueous phase from the fluid, the dewatered fluid being removed only after having passed through all coalescing beds.

3. A method as defined in claim 1 or 2, wherein the fluid is a liquid immiscible with water, further comprising the step of heating the stream of untreated fluid prior to entry into the coalescing bed.

4. A method as defined in any of the preceding claims, further comprising the steps of collecting and removing water separated from the fluid.

5. A method as defined in any of the preceding claims, wherein the fluid is a gas, further comprising the steps of:
passing a stream of a hydrophillic liquid through the coalescing bed in counter current to the stream of untreated fluid to cause the hydrophillic liquid to entrain water coalesced on the beads of the coalescing medium, and removing a mixture of hydrophillic liquid and water exiting the coalescing bed.

6. An apparatus for the separation of an aqueous phase from a fluid, comprising:
a vessel;
a coalescing bed positioned in the vessel for separating the aqueous phase from untreated fluid having the aqueous phase entrained therein;
input means for feeding the untreated fluid into the vessel;
the coalescing bed including a plurality of stacked beads having a non-conductive, non-absorbent and hydrophobic surface with a maximum surface roughness of about 1.6 µm Ra, and the coalescing bed being positioned in the vessel so that all untreated fluid fed into the vessel by the input means passes through the coalescing bed.

7. An apparatus as defined in claim 6, wherein the fluid is a liquid immiscible with water, the apparatus further comprising means for heating the untreated fluid prior to entry into the coalescing bed.

8. An apparatus as defined in claim 13, further comprising drainage means for removing from the vessel water separated in the coalescing bed,
wherein preferably the fluid is a gas, the apparatus further comprising liquid spreading means for passing a stream of a hydrophillic liquid through the coalescing bed in counter current to the fluid to take up water separated by the coalescing bed, and collecting means for removing from the vessel a mixture of hydrophillic liquid and water,
wherein preferably the hydrophillic liquid is selected from the group of ethylene glycol, diethylene glycol and triethylene glycol,
wherein preferably the coalescing bed is a graded bed of beads, the size of the beads increasing in flow direction of the fluid and the amount of beads of relatively smaller size being lower than the amount of beads of relatively larger size to prevent the coalescing bed packing too tightly for efficient coalescing action, and
wherein, preferably, processing means are provided for regenerating the hydrophillic liquid from the mixture of hydrophillic liquid and water removed from the vessel and transporting means for recirculating regenerated hydrophillic liquid to the spreading means.

9. An apparatus or method as defined in in any of the preceding claims, wherein the beads are of spherical shape, are preferably made of a hydrophillic material and have preferably an average diameter in the range of 1/4 inch to 2 inches, and
wherein preferably the beads are made of glass.

10. A method for separating an aqueous phase from a fluid, comprising the steps of:
providing a coalescing bed passing through the coalescing bed a stream of untreated fluid and removing dewatered fluid exiting from the coalescing bed.
